# EUROPEAN PATENT APPLICATION

(11) **EP 4 134 767 A1**
(43) Date of publication of application: **15.02.2023**
(21) Application number: 22189258.1
(22) Date of filing: 08.08.2022
(51) Int. Cl.: G05B 19/418, G05B 23/02

(54) **VISUALIZATION DEVICE, VISUALIZATION METHOD AND VISUALIZATION PROGRAM**

(30) Priority: 13.08.2021 JP 2021132032
(71) Applicant: Sintokogio, Ltd., Aichi 450-6424 (JP)
(72) Inventor: NAKAZAWA, Kazuya, Nagoya-shi, 4506424 (JP)
(74) Representative: Bittner, Thomas L.

(57) **Abstract**

A visualization device (1), which enables a user to easily ascertain an operating status of an equipment group when power consumption of a whole of the equipment group is particularly large or an operating status of the equipment group when power consumption of a whole of the equipment group is particularly small, includes a processor (11) for carrying out a first displaying process (S11) of displaying, on a display device (15), a first screen (σ1) indicating power consumption of a whole of an equipment group (2) in each of periods included in a period group, a second displaying process (S12) of displaying, on the display device (15), a second screen (σ2) indicating a cycle time of each of pieces of equipment included in the equipment group (2) in a particular period, and a third displaying process (S13) of displaying, on the display device (15), a third screen (o3) indicating a cycle time of each of processes carried out with use of a particular piece of equipment in the particular period. (Fig. 1)

## Description

The present invention relates to a visualization device, a visualization method, and a visualization program for visualizing an operating status of an equipment group.

### Background

As an effort to reduce CO₂, reduction of power consumption is also demanded at manufacturing sites. As part of those efforts, power consumption of each of pieces of equipment needs to be ascertained. Techniques available for such purposes include, for example, a technique disclosed in JP 2014-045585. JP 2014-045585 discloses a technique of grouping branch breakers in a factory or facility having a plurality of distribution boards, and displaying a used amount of electric power for each group.

### Summary

In order to reduce power consumption at the manufacturing site, it is important to optimize an operating status of an equipment group by ascertaining, in detail, (i) an operating status of the equipment group when power consumption of the whole of the equipment group is particularly large, or (ii) an operating status of the equipment group when power consumption of the whole of the equipment group is particularly small.

As described above, the technique disclosed in JP 2014-045585 carries out grouping of branch breakers and displays the used amount of electric power for each group, and is not intended to visualize an operating status of the equipment group. Therefore, even if the technique disclosed in JP 2014-045585 is used, an operating status of the equipment group cannot be ascertained in detail, and therefore, the operating status of the equipment group cannot be optimized.

An object of an aspect of the present invention is to realizing a visualization device, a visualization method, and a visualization program, which enable a user to easily ascertain (i) an operating status of an equipment group when power consumption of the whole of the equipment group is particularly large, or (ii) an operating status of the equipment group when power consumption of the whole of the equipment group is particularly small.

A visualization device in accordance with an aspect of the present invention is a visualization device for visualizing an operating status of an equipment group, and includes at least one processor that carries out a first displaying process, a second displaying process, and a third displaying process. A visualization method in accordance with an aspect of the present invention is a visualization method for visualizing an operating status of an equipment group, in which a first displaying process, a second displaying process, and a third displaying process are carried out with use of at least one processor.

Here, the first displaying process is a process of displaying, on a display device, a first screen indicating power consumption of a whole of the equipment group in each of periods included in a period group and selecting a particular period from the period group according to a user operation. The second displaying process is a process of displaying, on the display device, a second screen indicating a cycle time of each of pieces of equipment included in the equipment group in the particular period and selecting a particular piece of equipment from the equipment group according to a user operation. The third displaying process is a process of displaying, on the display device, a third screen indicating a cycle time of each of processes carried out with use of the particular piece of equipment in the particular period.

According to an aspect of the present invention, a user can easily ascertain (i) an operating status of an equipment group when power consumption of the whole of the equipment group is particularly large, or (ii) an operating status of the equipment group when power consumption of the whole of the equipment group is particularly small.

### Description of embodiments

- Fig. 1: is a diagram illustrating a configuration of a visualization device in accordance with an embodiment of the present invention.
- Fig. 2: is a flowchart showing a flow of a visualization method carried out by the visualization device illustrated in Fig. 1.
- Fig. 3: is a diagram illustrating an example of a first screen displayed in the visualization method illustrated in Fig. 2.
- Fig. 4: is a diagram illustrating an example of a second screen displayed in the visualization method illustrated in Fig. 2.
- Fig. 5: is a diagram illustrating an example of a third screen displayed in the visualization method illustrated in Fig. 2.
- Fig. 6: is a diagram illustrating a first variation of the first screen illustrated in Fig. 3.
- Fig. 7: is a diagram illustrating a second variation of the first screen illustrated in Fig. 3.
- Fig. 8: is a diagram illustrating a variation of the second screen illustrated in Fig. 4.
- Fig. 9: is a diagram illustrating a variation of the third screen illustrated in Fig. 5.

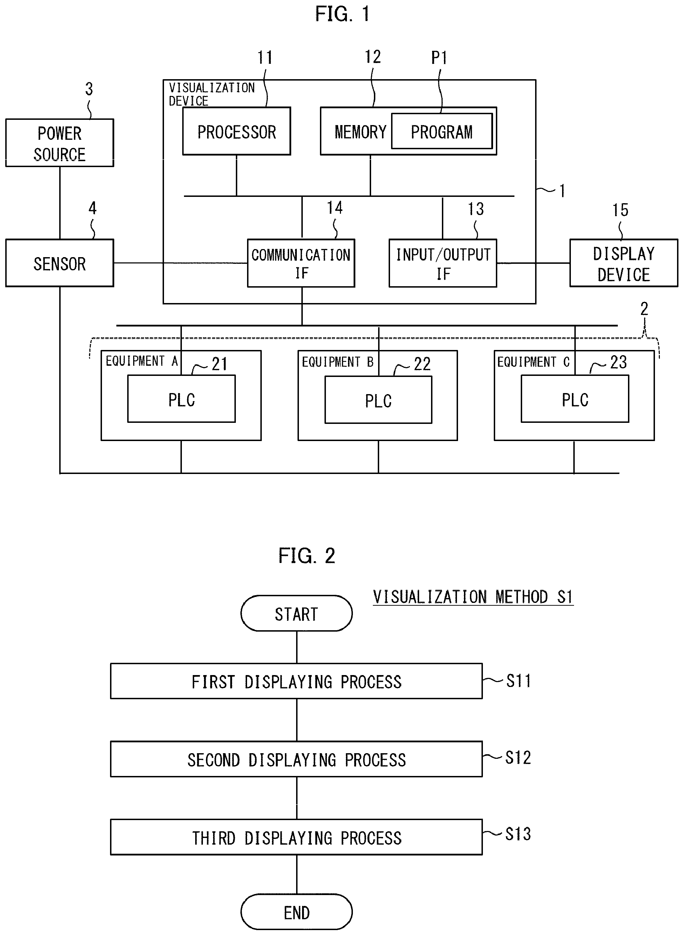

The following description will discuss a configuration of a visualization device 1 in accordance with an embodiment of the present invention, with reference to Fig. 1. Fig. 1 is a block diagram illustrating the configuration of the visualization device 1.

The visualization device 1 is a device for carrying out a visualization method S1 for visualizing an operating status of an equipment group 2. The equipment group 2 is a set of a plurality of pieces of equipment. In the present embodiment, the equipment group 2 is constituted by three pieces of equipment A, B, and C which receive electric power supplied from a single power source 3. A flow of the visualization method S1 will be described later with reference to other drawings.

The visualization device 1 includes a processor 11, a memory 12, an input/output interface (IF) 13, and a communication interface (IF) 14, as illustrated in Fig. 1. The processor 11, the memory 12, the input/output IF 13, and the communication IF 14 are connected to each other via buses.

The memory 12 stores a visualization program P1 for carrying out the visualization method S1. The processor 11 carries out the visualization method S1 according to the visualization program P1. Examples of devices that can be used as the processor 11 include a central processing unit (CPU). Examples of devices that can be used as the memory 12 include a flash memory.

An input device and/or an output device are connected to the input/output IF 13. Examples of the output device connected to the input/output IF 13 include a display device and a printer. Examples of the input device connected to the input/output IF 13 include a keyboard and a mouse. As the input/output IF 13, for example, HDMI (registered trademark), USB (registered trademark), or the like can be used. In the present embodiment, a display device 15 is connected to the input/output IF 13.

An information processing device is connected to the communication IF 14 through a communication network. Examples of the information processing device connected to the communication IF 14 include a sensor and a programmable logic controller (PLC). The communication IF 14 can be, for example, Ethernet (registered trademark), Wi-Fi (registered trademark), CC-Link (registered trademark), or the like. In the present embodiment, a sensor 4 and PLCs 21 through 23 are connected to the communication IF 14. The sensor 4 is provided on an electric power feed path from the power source 3 to the equipment group 2, and detects power consumption P of the whole of the equipment group 2. The power consumption P of the whole of the equipment group 2 conforms to or substantially conforms to PA+PB+PC, which is a sum of power consumptions PA, PB, and PC of the pieces of equipment A, B, and C. The PLC 21 is a PLC that controls the piece of equipment A, the PLC 22 is a PLC that controls the piece of equipment B, and the PLC 23 is a PLC that controls the piece of equipment C.

The piece of equipment A carries out processes A1, A2, and so forth. The PLC 21 has a function of identifying a cycle time TA0 of the piece of equipment A and cycle times TA1, TA2, and so forth of the processes A1, A2, and so forth, and notifying the visualization device 1 of the identified cycle times. Similarly, the piece of equipment B carries out processes B1, B2, and so forth. The PLC 22 has a function of identifying a cycle time TB0 of the piece of equipment B and cycle times TB1, TB2, and so forth of the processes B1, B2, and so forth, and notifying the visualization device 1 of the identified cycle times. Similarly, the piece of equipment C carries out processes C1, C2, and so forth. The PLC 23 has a function of identifying a cycle time TC0 of the piece of equipment C and cycle times TC1, TC2, and so forth of the processes C1, C2, and so forth, and notifying the visualization device 1 of the identified cycle times. The visualization device 1 has a function of visualizing the cycle times TA0, TA1, TA2, and so forth, TB0, TB1, TB2, and so forth, and TC0, TC1, TC2, and so forth which have been notified by the pieces of equipment A, B, and C. Those functions can be realized using a known technique (e.g., ePVS (registered trademark) of BEET,INC.), and therefore detailed descriptions thereof are omitted here.

In the present embodiment, the configuration is employed in which the pieces of equipment A, B, and C consume electric power supplied from the common power source 3. Note, however, that the present invention is not limited to such a configuration. For example, a configuration can be employed in which the pieces of equipment A, B, and C consume electric power supplied from different power sources. In such a case, for example, it is possible that a sensor is provided to each of the pieces of equipment A, B, and C, power consumptions PA, PB, and PC of the pieces of equipment A, B, and C are detected using those sensors, and power consumption P = PA+PB+PC is calculated in the visualization device 1.

Note that the visualization program P1 for causing the processor 11 to carry out the visualization method S1 can be stored on a non-transitory tangible storage medium which is readable by a computer. The storage medium can be the memory 12 or another storage medium. For example, a tape, a disk, a card, a semiconductor memory, a programmable logic circuit, or the like can be used as said another storage medium.

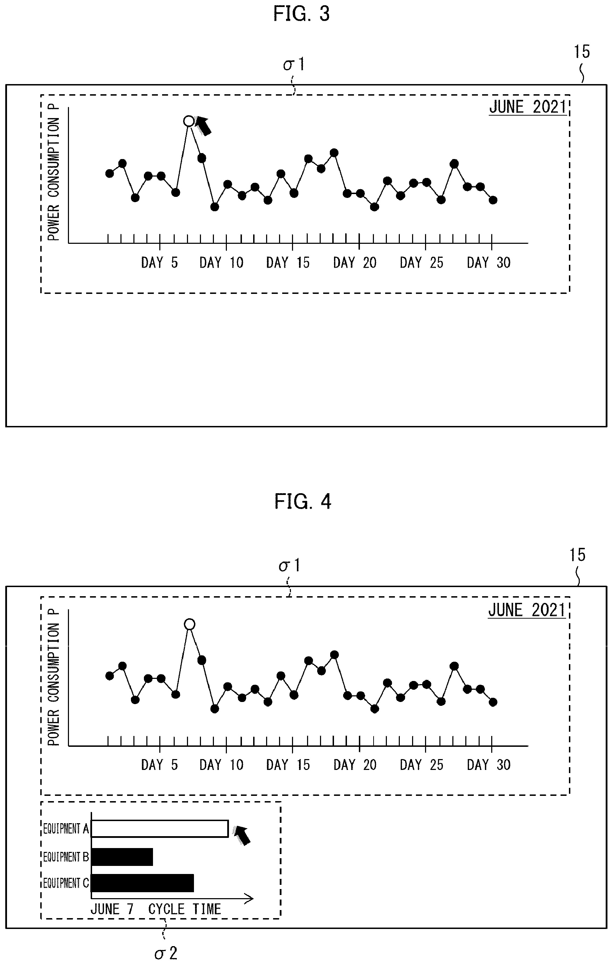

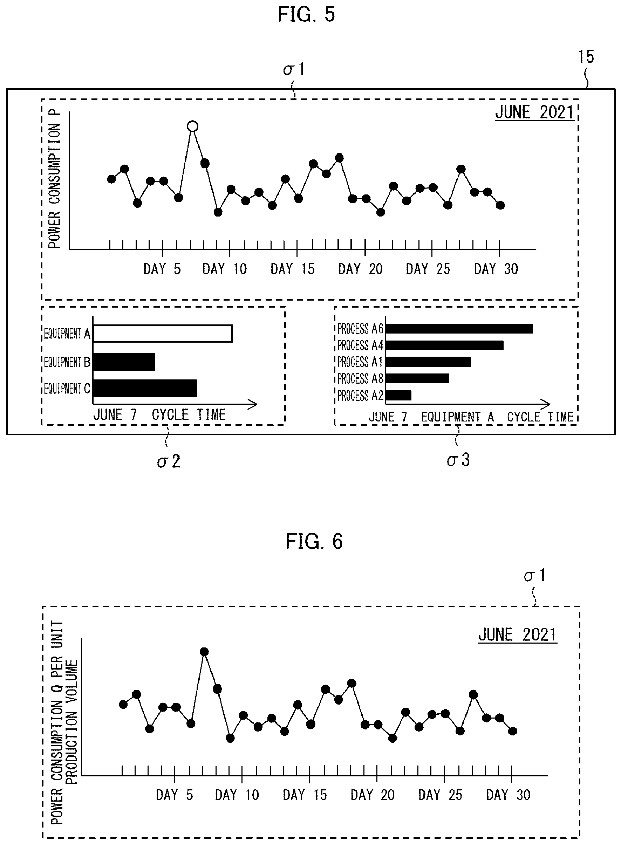

The following description will discuss a flow of the visualization method S1 carried out by the visualization device 1, with reference to Figs. 2 through 5. Fig. 2 is a flowchart showing the flow of the visualization method S1. Fig. 3 is a diagram illustrating an example of a first screen o1 displayed in the visualization method S1. Fig. 4 is a diagram illustrating an example of a second screen o2 displayed in the visualization method S1. Fig. 5 is a diagram illustrating an example of a third screen o3 displayed in the visualization method S1.

It is assumed that the information below is stored in the memory 12 for periods included in a period group, prior to carrying out the visualization method S1. The period is an arbitrary time unit. The period can be, for example, a month, a week, a day, or an hour. The period group is an arbitrary time unit longer than the period. The period group can be, for example, a year, a month, a week, or a day. In the examples illustrated in Figs. 3 through 5, a day is the period, and a month is the period group.
(1) Power consumption P of whole of equipment group 2;
(2) Cycle time TA0 of piece of equipment A;
(3) Cycle times TA1, TA2, and so forth of processes A1, A2, and so forth carried out by piece of equipment A;
(4) Cycle time TB0 of piece of equipment B;
(5) Cycle times TB1, TB2, and so forth of processes B1, B2, and so forth carried out by piece of equipment B;
(6) Cycle time TC0 of piece of equipment C; and
(7) Cycle times TC1, TC2, and so forth of processes C1, C2, and so forth carried out by piece of equipment C.

The visualization method S1 includes a first displaying process S11, a second displaying process S12, and a third displaying process S13, as illustrated in Fig. 2.

The first displaying process S11 is a process of displaying, on the display device 15, the first screen o1 indicating power consumption P of a whole of the equipment group 2 in each of periods included in a particular period group and selecting a particular period from the particular period group according to a user operation. In the present embodiment, the processor 11 reads from the memory 12 power consumption P of the whole of the equipment group 2 in each of periods included in the particular period group, and carries out the first displaying process S11.

An example of the first screen o1 is illustrated in Fig. 3. The first screen o1 illustrated in Fig. 3 includes a graph indicating power consumption P of the whole of the equipment group 2 for each day of June 2021. A user who has looked at the first screen o1 can easily identify a day on which power consumption P is particularly large in June 2021. Fig. 3 indicates a state in which the date June 7, 2021, on which the power consumption P is particularly large, is selected by a user operation using a mouse.

The second displaying process S12 is a process of displaying, on the display device 15, a second screen o2 indicating a cycle time of each of pieces of equipment included in the equipment group 2 in the particular period (which has been selected in the first displaying process S11) and selecting a particular piece of equipment from the equipment group 2 according to a user operation. In the present embodiment, the processor 11 reads from the memory 12 a cycle time of each of the pieces of equipment included in the equipment group 2 in the particular period, and carries out the second displaying process S12.

An example of the second screen o2 is illustrated in Fig. 4. The second screen o2 illustrated in Fig. 4 includes a graph showing cycle times TA0, TB0, and TC0 of the pieces of equipment A, B, and C on June 7, 2021. A user who has looked at the second screen o2 can easily identify a piece of equipment with a particularly long cycle time on June 7, 2021. Fig. 4 indicates a state in which the piece of equipment A with a particularly long cycle time is selected by a user operation using a mouse.

In the second displaying process S12, the processor 11 can display the first screen σ1 together with the second screen o2 on the display device 15, as illustrated in Fig. 4. This makes it possible to simultaneously confirm (i) a period in which power consumption P is particularly large and (ii) a piece of equipment with a particularly long cycle time.

The third displaying process S13 is a process of displaying, on the display device 15, the third screen o3 indicating a cycle time of each of processes carried out by the particular piece of equipment (selected in the second displaying process S12) in the particular period (selected in the first displaying process S11). In the present embodiment, the processor 11 reads from the memory 12 a cycle time of each of processes carried out by the particular piece of equipment in the particular period, and carries out the third displaying process S13.

An example of the third screen σ3 is illustrated in Fig. 5. The third screen σ3 illustrated in Fig. 5 includes a graph indicating cycle times TA1, TA2, and so forth of the processes A1, A2, and so forth carried out by the piece of equipment A on June 7, 2021. Here, a configuration is exemplified in which a predetermined number (here, five) of processes A6, A4, A1, A8, and A2 are selected in descending order of the cycle time, and cycle times TA6, TA4, TA1, TA8, and TA2 thereof are displayed as a bar graph.

In the third displaying process S13, the processor 11 can display the first screen o1 and the second screen o2 together with the third screen o3 on the display device 15, as illustrated in Fig. 5. This makes it possible to simultaneously confirm (i) a period in which power consumption P is particularly large, (ii) a piece of equipment with a particularly long cycle time, and (iii) a process with a particularly long cycle time.

In the present embodiment, a configuration is employed in which the visualization method S1 is carried out by a personal computer (PC) which is directly operated by a user. Note, however, that the present invention is not limited to this configuration. That is, a configuration can be employed in which the visualization method S1 is carried out on a cloud server connected to a PC through a network. In this case, the sensor 4 and the PLCs 21 through 23 are connected to the cloud server via a network. The cloud server then provides the PC with the first screen o1, the second screen o2, and the third screen o3, and the PC displays the first screen σ1, the second screen o2, and the third screen o3, which have been obtained from the cloud server, on a display device connected to the PC. The PC notifies the cloud server of a user operation detected using a mouse connected to the PC, and the cloud server selects a period (first displaying process S11) and a piece of equipment (second displaying process S12) according to the user operation notified from the PC. In this case, the cloud server functions as the "visualization device" in the claims.

A first variation of the first screen o1 will be described with reference to Fig. 6. Fig. 6 is a diagram illustrating the first variation of the first screen σ1.

The first screen o1 illustrated in Fig. 6 includes a line graph in which the horizontal axis represents a period (day), and the vertical axis represents power consumption Q per unit production volume. In a case where the production volume varies from period to period, the first screen o1 illustrated in Fig. 6 can be used to easily pick up a period with a particularly low electric power utilization ratio by finding out a peak value.

Here, the unit production volume is an arbitrary volume. The unit production volume can be, for example, one product or one lot of products. Regardless of the unit production volume, in a case where a production volume in a certain period is n times the unit production volume, power consumption Q per unit production volume in the certain period can be calculated according to Q = P/n from a production volume P in the certain period.

Note that, in the first screen o1 illustrated in Fig. 6, a line graph is used as a graph indicating power consumption P in each of periods. Note, however, that the present invention is not limited to this. For example, a bar graph can be used as the graph indicating power consumption P in each of periods.

In the first screen o1 illustrated in Fig. 6, the horizontal axis represents the period (day), and the vertical axis represents power consumption P or power consumption Q per unit production volume. Note, however, that the present invention is not limited to this. For example, it is possible that the vertical axis represents the period (day), and the horizontal axis represents power consumption Q per unit production volume.

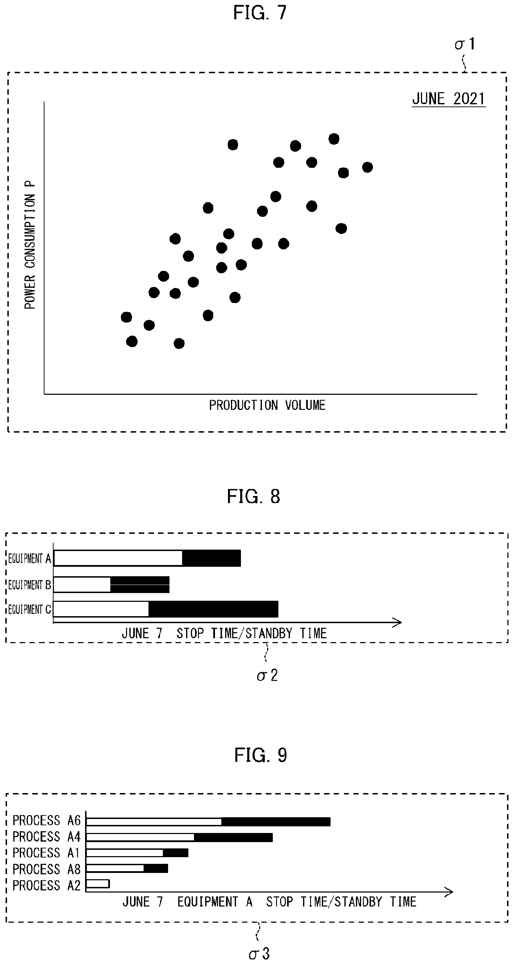

A second variation of the first screen o1 will be described with reference to Fig. 7. Fig. 7 is a diagram illustrating the second variation of the first screen o1.

The first screen o1 illustrated in Fig. 7 includes a scatter diagram in which the horizontal axis represents a production volume in each of periods and the vertical axis represents power consumption P in each of the periods. In a case where the production volume varies from period to period, the first screen o1 illustrated in Fig. 7 can be used to easily pick up a period with a particularly low electric power utilization ratio by finding out an outlier.

In the first screen o1 illustrated in Fig. 7, the scatter diagram in which the horizontal axis represents a production volume in each of periods and the vertical axis represents power consumption P in each of the periods is used as the graph indicating power consumption P in each of the periods. Note, however, that the present invention is not limited to this. For example, it is possible to use, as the graph indicating power consumption P in each of the periods, a scatter diagram in which the vertical axis represents a production volume in each of periods and the horizontal axis represents power consumption P in each of the periods.

A variation of the second screen o2 will be described with reference to Fig. 8. Fig. 8 is a diagram illustrating a variation of the second screen σ2.

The second screen σ2 illustrated in Fig. 8 includes a stacked bar graph indicating a stop time and a standby time in a particular period (selected in the first displaying process S11) of each of pieces of equipment included in the equipment group 2. A user who has looked at the second screen o2 illustrated in Fig. 8 can easily identify a piece of equipment with a particularly long stop time and/or standby time.

The stop time of each of pieces of equipment refers to a time during which the piece of equipment is stopped, and the standby time of each of pieces of equipment refers to a time during which the piece of equipment is being on standby. The standby time includes a time during which the piece of equipment waits until an intermediate product can be carried in from a piece of equipment at the preceding stage thereof, and a time during which the piece of equipment waits until an intermediate product can be carried out to a piece of equipment at the following stage thereof.

The following description will discuss a variation of the third screen o3 with reference to Fig. 9. Fig. 9 is a diagram illustrating a variation of the third screen o3.

The third screen o3 illustrated in Fig. 9 includes a stacked bar graph indicating a stop time and a standby time of each of processes carried out by a particular piece of equipment (selected in the second displaying process S12) in a particular period (selected in the first displaying process S11). A user who has looked at the third screen o3 illustrated in Fig. 9 can easily identify a process with a particularly long stop time and/or standby time.

The stop time of each of processes refers to a time during which an actuator used to carry out that process is stopped, and a standby time of each of processes refers to a time during which an actuator used to carry out that process is being on standby. The standby time includes a time during which the actuator waits until an intermediate product can be obtained from a process at the preceding stage of that process, and a time during which the actuator waits until an intermediate product can be provided to a process at the following stage of that process.

The present invention is not limited to the embodiments described above, but may be altered in various ways by a skilled person within the scope of the claims. Any embodiment based on a proper combination of technical means disclosed in the embodiments is also encompassed in the technical scope of the present invention.

### Reference Signs List

- 1: Visualization device
- 11: Processor
- 15: Display device
- S1: Visualization method
- S11: First displaying process
- S12: Second displaying process
- S13: Third displaying process
- σ1: First screen
- σ2: Second screen
- σ3: Third screen

## Claims

1. A visualization device for visualizing an operating status of an equipment group, said visualization device comprising at least one processor that carries out:
- a first displaying process of displaying, on a display device, a first screen indicating power consumption of a whole of the equipment group in each of periods included in a period group and selecting a particular period from the period group according to a user operation;
- a second displaying process of displaying, on the display device, a second screen indicating a cycle time of each of pieces of equipment included in the equipment group in the particular period and selecting a particular piece of equipment from the equipment group according to a user operation; and
- a third displaying process of displaying, on the display device, a third screen indicating a cycle time of each of processes carried out with use of the particular piece of equipment in the particular period.

2. The visualization device as set forth in claim 1, wherein:
- in the second displaying process, the at least one processor causes the display device to display the first screen and the second screen; and
- in the third displaying process, the at least one processor causes the display device to display the third screen together with the first screen and the second screen.

3. The visualization device as set forth in claim 1 or 2, wherein:
- the first screen includes a graph in which a horizontal axis represents one of a period and power consumption per unit production volume of the equipment group, and a vertical axis represents the other of the period and the power consumption per unit production volume.

4. The visualization device as set forth in claim 1 or 2, wherein:
- the first screen includes a scatter diagram in which a horizontal axis represents one of a production volume and power consumption of the equipment group, and a vertical axis represents the other of the production volume and the power consumption.

5. The visualization device as set forth in any one of claims 1 through 4, wherein:
- the second screen indicates one or both of a stop time and a standby time of each of the pieces of equipment included in the equipment group in the particular period, together with or in place of a cycle time of each of the pieces of equipment included in the equipment group in the particular period.

6. The visualization device as set forth in any one of claims 1 through 5, wherein:
- the third screen indicates one or both of a stop time and a standby time of each of the processes carried out with use of the particular piece of equipment in the particular period, together with or in place of a cycle time of each of the processes carried out with use of the particular piece of equipment in the particular period.

7. A method for visualizing an operating status of an equipment group, said method comprising:
- carrying out a first displaying process of displaying, on a display device, a first screen indicating power consumption of the equipment group in each of periods included in a period group and selecting a particular period from the period group according to a user operation;
- carrying out a second displaying process of displaying, on the display device, a second screen indicating a cycle time of each of pieces of equipment included in the equipment group in the particular period and selecting a particular piece of equipment from the equipment group according to a user operation; and
- carrying out a third displaying process of displaying, on the display device, a third screen indicating a cycle time of each of processes carried out with use of the particular piece of equipment in the particular period,
- the first displaying process, the second displaying process, and the third displaying process being carried out with use of at least one processor.

8. A visualization program for causing a computer to operate as a visualization device recited in any one of claims 1 through 6,
- the computer including the at least one processor, and
- the visualization program causing the at least one processor to carry out the first displaying process, the second displaying process, and the third displaying process.
